(19)

**Europäisches Patentamt**
**European Patent Office**
**Office européen des brevets**

(11) **EP 4 590 033 A1**

(12) **EUROPEAN PATENT APPLICATION**
published in accordance with Art. 153(4) EPC

(43) Date of publication:
**23.07.2025 Bulletin 2025/30**

(21) Application number: **23865676.3**

(22) Date of filing: **27.06.2023**

(51) International Patent Classification (IPC):
**H04W 52/02** $^{(2009.01)}$    **H04W 76/28** $^{(2018.01)}$
**G06N 20/20** $^{(2019.01)}$

(52) Cooperative Patent Classification (CPC):
**G06N 20/20; H04W 52/02; H04W 76/28**

(86) International application number:
**PCT/KR2023/008888**

(87) International publication number:
**WO 2024/058372 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.09.2022 KR 20220114632**

(71) Applicant: **LG Electronics Inc.**
**Yeongdeungpo-gu**
**Seoul 07336 (KR)**

(72) Inventors:
• **OH, Jaeky**
  **Seoul 06772 (KR)**
• **CHUNG, Jaehoon**
  **Seoul 06772 (KR)**
• **JANG, Jihwan**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR SAVING POWER USING CONTEXT INFORMATION-BASED ARTIFICIAL INTELLIGENCE IN WIRELESS COMMUNICATION SYSTEM**

(57)    A method of operating a terminal in a wireless communication system may comprise establishing a radio resource control (RRC) connection with a base station, obtaining context information, transmitting a preferred parameter value derived by an artificial intelligence model based on the context information to the base station, receiving an RRC reconfiguration message determined based on the preferred parameter from the base station, receiving an RRC reconfiguration complete message to the base station and receiving data from the base station. The preferred parameter value may include a discontinuous reception (DRX) control value.

```
        ┌─────────┐
        │  START  │
        └────┬────┘
             │              S2001
   ┌─────────▼──────────────┐
   │ OBTAIN CONTEXT INFORMATION │
   └─────────┬──────────────┘
             │              S2003
   ┌─────────▼──────────────┐
   │  TRANSMIT PREFERRED PARAMETER │
   │     VALUE TO BASE STATION     │
   │ BASED ON CONTEXT INFORMATION  │
   └─────────┬──────────────┘
             │              S2005
   ┌─────────▼──────────────┐
   │ RECEIVE RRC RECONFIGURATION │
   │   MESSAGE FROM BASE STATION  │
   └─────────┬──────────────┘
             │              S2007
   ┌─────────▼──────────────┐
   │ TRANSMIT RRC RECONFIGURATION │
   │ COMPLETE MESSAGE TO BASE STATION │
   └─────────┬──────────────┘
             │              S2009
   ┌─────────▼──────────────┐
   │ RECEIVE DATA FROM BASE STATION │
   └─────────┬──────────────┘
             │
        ┌────▼────┐
        │   END   │
        └─────────┘
```

**FIG. 20**

EP 4 590 033 A1

## Description

### Technical Field

The following description relates to a wireless communication system, and to a device and method for power saving using artificial intelligence based on context information in a wireless communication system.

In particular, a terminal and a base station can save power by using artificial intelligence to control a discontinuous reception (DRX) control value and a bandwidth part (BWP) control value.

### Background Art

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (mMTC) for providing various services anytime anywhere by connecting a plurality of apparatuses and things but also communication systems considering services/user equipments (UEs) sensitive to reliability and latency have been proposed. To this end, various technical configurations have been proposed.

### Disclosure

### Technical Problem

The present disclosure can provide a device and method for signal transmission and reception in a wireless communication system.

The present disclosure can provide a device and method for power saving using artificial intelligence based on context information in a wireless communication system.

The present disclosure can provide a method for optimizing DRX control values using artificial intelligence in a wireless communication system.

The present disclosure can provide a method of optimizing BWP control values using artificial intelligence in a wireless communication system.

The present disclosure can provide a method of obtaining context information at a terminal and a base station in a wireless communication system.

The present disclosure can provide a method of learning an artificial intelligence model based on context information in a wireless communication system.

The present disclosure can provide a method of updating a global artificial intelligence model based on context information in a wireless communication system.

The present disclosure can provide a method of optimizing a DRX control value and a BWP control value using a reinforcement learning model and a MAB model in a wireless communication system.

The present disclosure can provide a method of saving power by optimizing each control value through an artificial intelligence model that detects a change in a communication environment in a wireless communication system and recognizes context information of a terminal and a base station.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a terminal in a wireless communication system may comprise establishing a radio resource control (RRC) connection with a base station, obtaining context information, transmitting a preferred parameter value derived by an artificial intelligence model based on the context information to the base station, receiving an RRC reconfiguration message determined based on the preferred parameter from the base station, receiving an RRC reconfiguration complete message to the base station and receiving data from the base station.

The preferred parameter value may include a discontinuous reception (DRX) control value.

In addition, as an example of the present disclosure, a method of operating a base station in a wireless communication system may comprise establishing a radio resource control (RRC) connection with a terminal, transmitting context information of the base station to the terminal, receiving a preferred parameter value derived by an artificial intelligence model from the terminal, transmitting an RRC reconfiguration message to the terminal based on the preferred parameter value, receiving an RRC reconfiguration complete message from the terminal, and transmitting data to the terminal. The preferred parameter value may include a discontinuous reception (DRX) control value.

In addition, as an example of the present disclosure, a terminal in a wireless communication system may comprise a transceiver and a processor connected to the transceiver. The processor may establish a radio resource control (RRC) connection with a base station, obtain context information, transmit a preferred parameter value derived by an artificial intelligence model based on the context information to the base station, receive an RRC reconfiguration message determined based on the preferred parameter from the base station, receive an RRC reconfiguration complete message to the base station, and receive data from the base station. The preferred parameter value may include a discontinuous reception (DRX) control value.

In addition, as an example of the present disclosure, a base station in a wireless communication system may comprise a transceiver and a processor connected to the transceiver. The processor may establish a radio resource control (RRC) connection with a terminal, transmit context information of the base station to the terminal, receive a preferred parameter value derived by an artificial intelligence model from the terminal, transmit an RRC reconfiguration message to the terminal based on the preferred parameter value, receive an RRC reconfiguration complete message from the terminal, and transmit data to the terminal. The preferred parameter value may include a discontinuous reception (DRX) control value.

In addition, as an example of the present disclosure, a communication device may comprise at least one processor and at least one memory connected to the at least one processor and configured to store instructions that direct operations when executed by the at least one processor. The operations comprise establishing a radio resource control (RRC) connection with a base station, obtaining context information, transmitting a preferred parameter value derived by an artificial intelligence model based on the context information to the base station, receiving an RRC reconfiguration message determined based on the preferred parameter from the base station, receiving an RRC reconfiguration complete message to the base station, and receiving data from the base station. The preferred parameter value may include a discontinuous reception (DRX) control value.

In addition, as an example of the present disclosure, a non-transitory computer-readable medium storing at least one instruction may comprise the at least one instruction executable by a processor. The at least one instruction may enable a device to establish a radio resource control (RRC) connection with a base station, obtain context information, transmit a preferred parameter value derived by an artificial intelligence model based on the context information to the base station, receive an RRC reconfiguration message determined based on the preferred parameter from the base station, receive an RRC reconfiguration complete message to the base station, and receive data from the base station. The preferred parameter value may include a discontinuous reception (DRX) control value.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

## Advantageous Effects

As is apparent from the above description, the embodiments of the present disclosure have the following effects.

According to the present disclosure, power used in wireless communication can be saved.

According to the present disclosure, a DRX control value and a BWP control value used in wireless communication can be optimized.

According to the present disclosure, an artificial intelligence model can be utilized to optimize a DRX control value and a BWP control value.

According to the present disclosure, a DRX control values can be adaptively optimized according to a terminal status, a base station status, or a usage environment, so as to maximize the power saving effect of the terminal without increasing communication delay and signaling overhead.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

## Description of Drawings

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 illustrates an example of a communication system applicable to the present disclosure.

FIG. 2 illustrates an example of a wireless apparatus applicable to the present disclosure.

FIG. 3 illustrates a method of processing a transmitted signal applicable to the present disclosure.

FIG. 4 illustrates a communication procedure between a terminal and a base station that are applicable to the present disclosure.

FIG. 5 illustrates an example of a communication structure providable in a 6th generation (6G) system applicable to the present disclosure.

FIG. 6 illustrates an electromagnetic spectrum applicable to the present disclosure.

FIG. 7 illustrates a THz communication method applicable to the present disclosure.

FIG. 8 illustrates a THz signal generation method applicable to the present disclosure.

FIG. 9 illustrates a wireless communication transceiver applicable to the present disclosure.

FIG. 10 illustrates a transmitter structure applicable to the present disclosure.

FIG. 11 illustrates a modulator structure applicable to the present disclosure.

FIG. 12 illustrates a perceptron architecture in an artificial neural network applicable to the present disclosure.

FIG. 13 illustrates an artificial neural network architecture applicable to the present disclosure.

FIG. 14 illustrates the structure of a DRX cycle applicable to the present disclosure.

FIG. 15 illustrates the structure of an inactivity timer within a DRX cycle applicable to the present disclosure.

FIG. 16 illustrates an example of a procedure for setting DRX parameter values according to an embodiment of the present disclosure.

FIG. 17 illustrates another example of a procedure for setting parameter values related to DRX according to an embodiment of the present disclosure.

FIG. 18 illustrates an example of a time distribution and a power distribution related to power consumption of a terminal according to a service used by the terminal.

FIG. 19 illustrates a conceptual diagram in which a terminal and a base station adaptively change each DRX parameter value and a bandwidth of the terminal according to an embodiment of the present disclosure.

FIG. 20 illustrates an example of a procedure in which a terminal saves power based on context information according to an embodiment of the present disclosure.

FIG. 21 illustrates an example of a procedure in which a base station saves power based on context information according to an embodiment of the present disclosure.

FIG. 22 illustrates a signal flow diagram of a procedure in which a terminal obtains context information of a base station according to an embodiment of the present disclosure.

FIG. 23 illustrates a signal flow diagram of a procedure in which a terminal and a base station reconfigure RRC based on context information according to an embodiment of the present disclosure.

FIG. 24 illustrates a signal flow diagram of a procedure in which a terminal learns an artificial intelligence model and exchanges the artificial intelligence model with a base station according to an embodiment of the present disclosure.

FIG. 25 illustrates a method in which a base station determines a global model through local models received from terminals using federated learning according to an embodiment of the present disclosure.

FIG. 26 illustrates an example of an artificial intelligence model applicable according to an embodiment of the present disclosure.

FIG. 27 illustrates a process of learning a reinforcement learning artificial intelligence model according to an embodiment of the present disclosure.

FIG. 28 illustrates a process of learning a MAB-based artificial intelligence model according to an embodiment of the present disclosure.

## Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. ABS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access system including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 38.211, 3GPP TS 38.212, 3GPP TS 38.213, 3GPP TS 38.321 and 3GPP TS 38.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

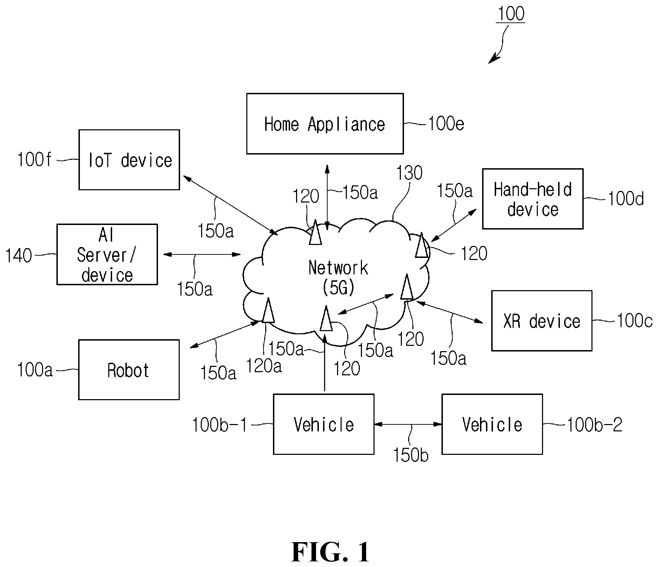

FIG. 1 illustrates an example of a communication system applicable to the present disclosure.

Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Communication system applicable to the present disclosure

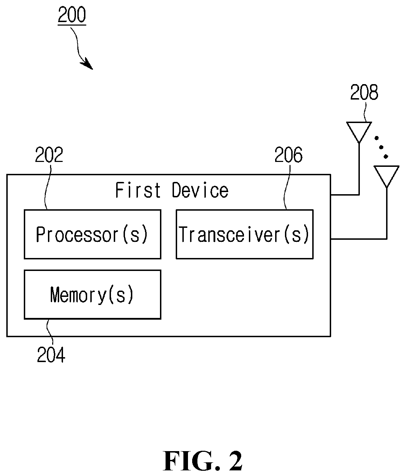

FIG. 2 illustrates an example of a wireless device applicable to the present disclosure.

Referring to FIG. 2, a wireless device 200 may transmit and receive radio signals through various radio access technologies (e.g., LTE, LTE-A, LTE-A pro, NR, 5G, 5G-A, 6G). The wireless device 200 may include at least one processor 202 and at least one memory 204 and may further include at least one transceiver 206 and/or at least one antenna 208.

The processor 202 may be configured to control the memory 204 and/or the transceiver 206 and to implement descriptions, functions, procedures, proposals, methods and/or operational flowcharts disclosed herein. For example, the processor 202 may process information in the memory 204 to generate first information/signal and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be coupled with the processor 202, and store a variety of information related to operation of the processor 202. For example, the memory 204 may store software code including instructions for performing all or some of the processes controlled by the processor 202 or performing the descriptions, functions, procedures, proposals, methods and/or operational flowcharts disclosed herein. Here, the processor 202 and the memory 204 may be part of a communication modem/circuit/chip designed to implement wireless communication technology. The transceiver 206 may be coupled with the processor 202 to transmit and/or receive radio signals through at least one antenna 208. The transceiver 206 may include a transmitter and/or a receiver. The transceiver 206 may be used interchangeably with a radio frequency (RF) unit. In the present disclosure, the wireless device may refer to a communication modem/circuit/chip.

Hereinafter, hardware elements of the wireless device 200 will be described in greater detail. Without being limited thereto, at least one protocol layer may be implemented by at least one processor 202. For example, at least one processor 202 may implement at least one layer (e.g., functional layers such as PHY (physical), MAC (media access control), RLC (radio link control), PDCP (packet data convergence protocol), RRC (radio resource control), SDAP (service data adaptation protocol)). At least one processor 202 may generate at least one protocol data units (PDUs) and/or at least one service data unit (SDU) according to the descriptions, functions, procedures, proposals, methods and/or operational flowcharts disclosed herein. At least one processor 202 may generate messages, control information, data or information according to the descriptions, functions, procedures, proposals, methods and/or operational flowcharts disclosed herein. At least one processor 202 may generate PDUs, SDUs, messages, control information, data or information according to the functions, procedures, proposals and/or methods disclosed herein and provide the PDUs, SDUs, messages, control information, data or information to at least one transceiver 206. At least one processor 202 may receive signals (e.g., baseband signals) from at least one transceiver 206 and acquire PDUs, SDUs, messages, control information, data or information according to the descriptions, functions, procedures, proposals, methods and/or operational flowcharts disclosed herein.

At least one processor 202 may be referred to as controller, microcontroller, microprocessor or microcomputer. At least one processor 202 may be implemented by hardware, firmware, software or a combination thereof. For example, at least one application specific integrated circuit (ASIC), at least one digital signal processor (DSP), at least one digital signal processing device (DSPD), at least one programmable logic device (PLD) or at least one field programmable gate array (FPGA) may be included in at least one processor 202. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in at least one processor 202 or stored in at least one memory 204 to be driven by at least one processor 202. The descriptions, functions, procedures, proposals, methods and/or operational flowcharts disclosed herein implemented using firmware or software in the form of code, a command and/or a set of commands.

At least one memory 204 may be coupled with at least one processor 202 to store various types of data, signals, messages, information, programs, code, instructions and/or commands. At least one memory 204 may be composed of a read only memory (ROM), a random access memory (RAM), an erasable programmable read only memory (EPROM), a flash memory, a hard drive, a register, a cache memory, a computer-readable storage medium and/or combinations thereof. At least one memory 204 may be located inside and/or outside at least one processor 202. In addition, at least one memory 204 may be coupled with at least one processor 202 through various technologies such as wired or wireless connection.

At least one transceiver 206 may transmit user data, control information, radio signals/channels, etc. described in the methods and/or operational flowcharts of the present disclosure to at least one other apparatuses. At least one transceiver 206 may receive user data, control information, radio signals/channels, etc. described in the methods and/or operational flowcharts of the present disclosure from at least one other apparatuses. For example, at least one transceiver 206 may be coupled with at least one processor 202 to transmit/receive radio signals. For example, at least one processor 202 may perform control such that at least one transceiver 206 transmits user data, control information or radio signals to at least one other apparatuses. In addition, at least one processor 202 may perform control such that at least one transceiver 206 receives user data, control information or radio signals from at least one other apparatus. In addition, at least one transceiver 206 may be coupled with at least one antenna 208, and at least one transceiver 206 may be configured to transmit/receive user data, control information, radio signals/channels, etc. described in the descriptions, functions, procedures, proposals, methods and/or operational flowcharts disclosed herein through at least one antenna 208. In the present disclosure, at least one antenna may be a plurality of physical antennas or a plurality of logical antennas (e.g., antenna ports). At least one transceiver 206 may convert the received radio signals/channels, etc. from RF band signals to baseband signals, in order to process the received user data, control information, radio signals/channels, etc. using at least one processor 202. At least one transceiver 206 may convert the user data, control information, radio signals/channels processed using at least one processor 202 from baseband signals into RF band signals. To this end, at least one transceiver 206 may include (analog) oscillator and/or filters.

The constituent elements described with reference to FIG. 2 may be referred to by different terms from a functional perspective. For example, the processor 202 may be referred to as a controller, the transceiver 206 may be referred to as a communication unit, and the memory 204 may be referred to as a storage unit. In some cases, the communication unit may be used to mean at least a part of the processor 202 and the transceiver 206.

The structure of the wireless device described with reference to FIG. 2 may be understood as a structure of at least some of various devices. For example, the structure of the wireless device exemplified in FIG. 2 may be at least some of the various devices described with reference to FIG. 1 (e.g., the robot 100a, the vehicles 100b-1 and 100b-2, the XR device 100c, the hand-held device 100d, the home appliance 100e, the IoT device 100f, and the AI device/server 100g). Furthermore, according to various embodiments, apart from the constituent elements exemplified in FIG. 2, a device may further include other constituent elements.

For example, a device may be a hand-held device such as a smart phone, a smart pad, a wearable device (e.g., a smart watch, smart glasses) and a portable computer (e.g., a laptop). In this case, the device may further include at least one of a power supply unit for supplying power and including a wired/wireless charging circuit, a battery and the like, an interface unit including at least one port for connecting to another device (e.g., an audio input/output port, a video input/output port), and an input/output unit for inputting and outputting image information/signals, audio information/-signals, data and/or information input from a user.

For example, a device may be a moving device such as a mobile robot, a vehicle, a train, a manned/unmanned aerial vehicle (AV) and a ship. In this case, the device may further include at least one of a drive unit including at least one of the engine, motor, powertrain, wheels, brake and steering device of the device, a power supply unit for supplying power and including a wired/wireless charging circuit, a battery and the like, a sensor unit for sensing state information of the device or surrounding thereof, environment information and user information, an autonomous driving unit for performing functions of lane keeping, speed control, destination setting and the like, and a position measurement unit for obtaining location information of a moving object through a global positioning system (GPS) and various sensors.

For example, a device may be an XR device such as an HMD, a head-up display (HUD) provided in a vehicle, a television set, a smart phone, a computer, a wearable device, a home appliance, digital signage, a vehicle and a robot. In this case, the device may further include at least one of a power supply unit for supplying power and including a wired/wireless charging circuit, a battery and the like, an input/output unit for obtaining control information and data from the outside and outputting a generated XR object, and a sensor unit for sensing state information of the device or surrounding thereof, environment information and user information.

For example, a device may be a robot classifiable for industry, medical, domestic or military purposes depending on intended use or field. In this case, the device may further include at least one of a sensor unit for sensing state information of the device or surrounding thereof, environment information and user information and a drive unit for performing various physical operations like moving robot joints.

For example, a device may be an AI device such as TV, a projector, a smart phone, a PC, a laptop, a terminal for digital broadcasting, a tablet PC, a wearable device, a set top box (STB), a radio, a washing machine, a refrigerator, digital signage, a robot and a vehicle. In this case, the device may further include at least one of an input unit for obtaining various types of data from the outside, an output unit for generating outputs related to sight, hearing and touch, a sensor unit for sensing state information of the device or surrounding thereof, environment information and user information and a training unit for learning of a model composed of artificial neural networks by using learning data.

The structure of the wireless device exemplified in FIG. 2 may be understood as a part of a RAN node (e.g., a base station, a DU, a RU, a RRH). That is, the device exemplified in FIG. 2 may be a RAN node. In this case, the device may further include a wired transceiver for front haul and/or back haul communication. However, if front haul and/or back haul communication is based on wireless communication, the at least one transceiver 206 exemplified in FIG. 2 may be used for front haul and/or back haul communication, and no wired transceiver may be included.

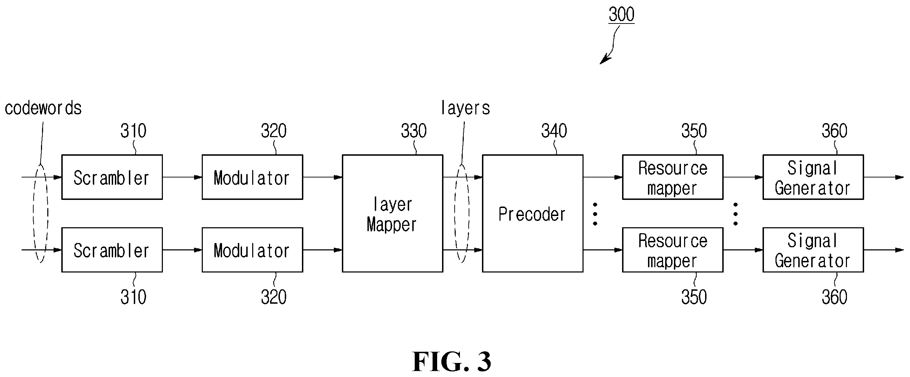

FIG. 3 illustrates a method of processing a transmitted signal applicable to the present disclosure. For example, the transmitted signal may be processed by a signal processing circuit. At this time, a signal processing circuit 300 may include a scrambler 310, a modulator 320, a layer mapper 330, a precoder 340, a resource mapper 350, and a signal generator 360. At this time, for example, the operation/function of FIG. 3 may be performed by the processors 202 and/or the transceiver 206 of FIG. 2. In addition, for example, the hardware element of FIG. 3 may be implemented in the processor 202 of FIG. 2 and/or the transceiver 206 of FIG. 2. For example, blocks 310 to 360 may be implemented in the processor 202 of FIG. 2. In addition, blocks 310 to 350 may be implemented in the processor 202 of FIG. 2 and a block 360 may be implemented in the transceivers 206 of FIG. 2, without being limited to the above-described embodiments.

A codeword may be converted into a radio signal through the signal processing circuit 300 of FIG. 3. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH). Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to at least one transport layer by the layer mapper 330.

**EP 4 590 033 A1**

Modulation symbols of each transport layer may be mapped to corresponding antenna port(s) by the precoder 340 (precoding). The output z of the precoder 340 may be obtained by multiplying the output y of the layer mapper 330 by an N*M precoding matrix W. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200 of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

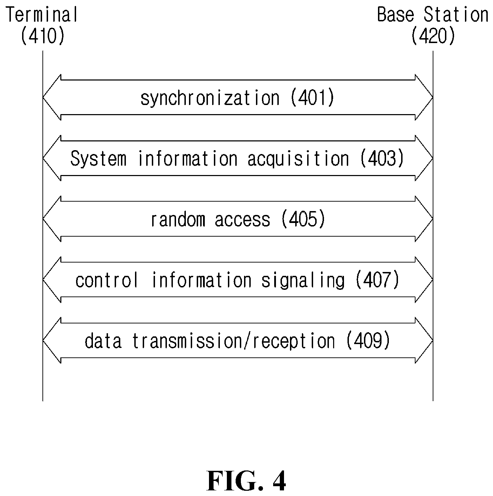

FIG. 4 illustrates a communication procedure between a terminal and a base station that are applicable to the present disclosure. FIG. 4 exemplifies an operation of transmitting and/or receiving data by a terminal 410 and a base station 420 and operations performed prior to the operation.

Referring to FIG. 4, at step S401, the terminal 410 and the base station 420 perform synchronization. For example, the terminal 410 performs an initial cell search operation. Specifically, the terminal 410 may detect at least one synchronization signal that is transmitted from the base station 420 according to a predefined rule. Herein, the synchronization signal may include a plurality of synchronization signals that are classified according to structure or purpose (e.g., a primary synchronization signal, a secondary synchronization signal). Thus, the terminal 410 may identify the boundary of a frame, a subframe, a slot and/or a symbol of the base station 420 and obtain information on the base station 420 (e.g., a cell identifier).

At step S403, the terminal 410 obtains system information transmitted from the base station 420. The system information is information related to the attribute, feature and/or capability of the base station 420, which is necessary to access the base station 420 and to use a service, and may be classified according to a content (e.g., whether or not it is absolutely necessary for access) and a transmission structure (e.g,, a channel used therein, whether or not on-demand provision is performed) and be classified, for example, into a master information block (MIB) and a system information block (SIB). If necessary, the terminal 410 may transmit a signal for requesting system information before receiving system information. However, the request and provision of the system information may be performed after a random access procedure described below.

At step S405, the terminal 410 and the base station 420 perform the random access procedure. The terminal 410 may transmit and/or receive at least one message (e.g., a random access preamble, a random access response (RAR) message) for the random access procedure based on information related to a random access channel of the base station 420 (e.g., a channel position, a channel structure, a structure of a supported preamble), which is obtained through the system information. For example, the terminal 410 may transmit a preamble (e.g., MSG1) through a random access channel, receive a RAR message (e.g., MSG2), transmit a message (e.g., MSG3) including information related to the terminal 410 (e.g., identification information) by using scheduling information included in the RAR message to the base station 420, and receive a message (e.g., MSG4) for contention resolution and/or connection configuration. As another example, MSG1 and MSG3 as a single message or MSG2 and MSG4 as a single may be transmitted and received.

At step S407, the terminal 410 and the base station 420 perform signaling of control information. Herein, control information may be defined in various layers such as a layer for controlling connection (e.g., a radio resource control (RRC) layer), a layer for processing mapping between a logical channel and a transmission channel (e.g., a media access control (MAC) layer), and a layer for processing a physical channel (e.g., a physical (PHY) channel). For example, the terminal 410 and the base station 420 may perform at least one of signaling for establishing connection, signaling for determining a communication-related configuration, and signaling for indicating an allocated resource.

At step S409, the terminal 410 and the base station 420 transmit and/or receive data. In other words, the terminal 410 and the base station 420 may process data based on the signaling of the control information and transmit and/or receive the data. For example, when transmitting the data, the terminal 410 or the base station 420 may perform, for information bits, at least one of channel encoding, rate matching, scrambling, constellation mapping, layer mapping, waveform modulation, antenna mapping and resource mapping. On the other hand, when receiving the data, the terminal 410 or the base station 420 may perform at least one of signal extraction from a resource, waveform demodulation for each antenna, signal arrangement considering layer mapping, constellation demapping, descrambling, and channel decoding.

6G communication system and core implementation technology of 6G system

A 5G system defines various operation bands within a frequency range 1 (FR1) from 410MHz to 7,125MHz and a frequency range 2 (FR2) from 24,250MHz to 71,000MHz. Various frequencies are being discussed as operation bands of the subsequent 6G system, and the use of higher frequencies than the 5G system is under consideration for a broader bandwidth and a higher transmission speed. Among the frequencies, the use of a THz (Terahertz) frequency band is under discussion including a range from about 100GHz to 10THz. The THz frequency band is a band with both the penetrability of radio waves and the straightness of light waves, and communication using the THz frequency band is expected to serve as a transitional role from the existing radio wave-centered communication to light wave-based communication.

Thus, a 6G (wireless communication) system using a THz frequency band has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 1 below.

Table 1

| | |
|---|---|
| **Per device peak data rate** | 1 Tbps |
| **E2E latency** | 1 ms |
| **Maximum spectral efficiency** | 100bps/Hz |
| **Mobility support** | Up to 1000km/hr |
| **Satellite integration** | Fully |
| **AI** | Fully |
| **Autonomous vehicle** | Fully |
| **XR** | Fully |
| **Haptic Communication** | Fully |

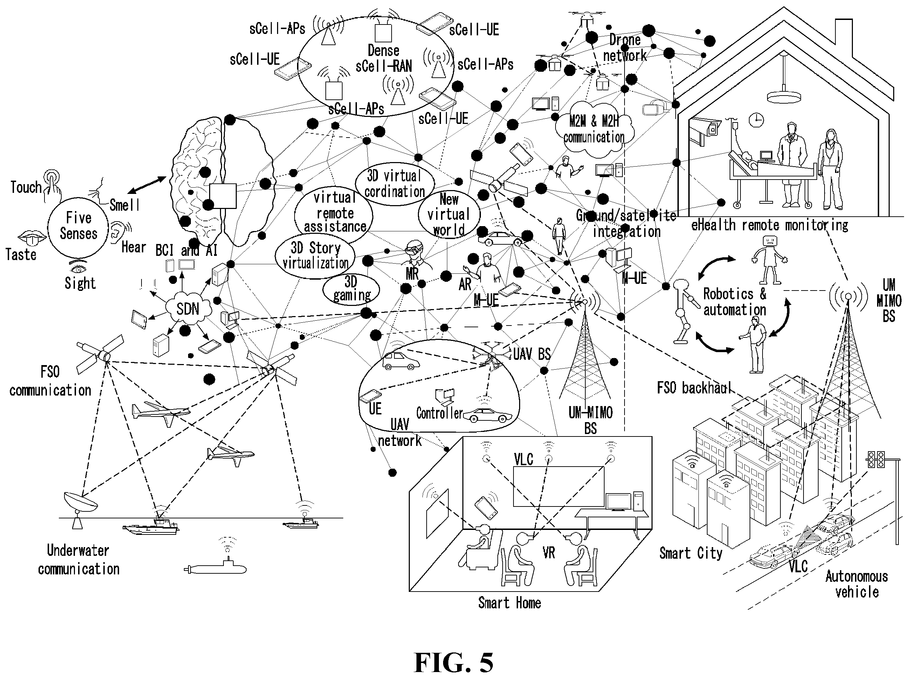

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security. FIG. 5 illustrates an example of a communication structure providable in a 6G system applicable to the present disclosure. Referring to FIG. 5, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system.

For core implementation technologies of 6G system, artificial intelligence (AI), Terahertz (THz) communication, optical wireless technology, FS0 backhaul network, massive MIMO technology, blockchain, 3D networking, quantum communication, unmanned aerial vehicles, cell-free communication, wireless information and energy transfer (WIET), integration of sensing and communication, integration of access and backhaul networks, hologram beamforming, big data analysis, large intelligence surface (LIS) and other technologies may be adopted.

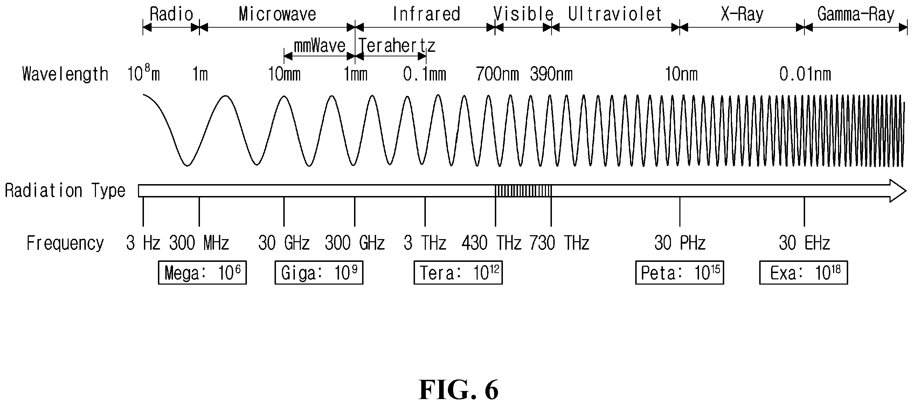

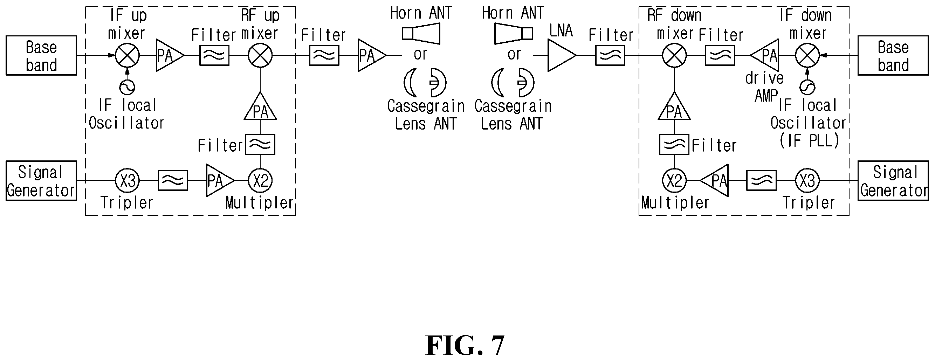

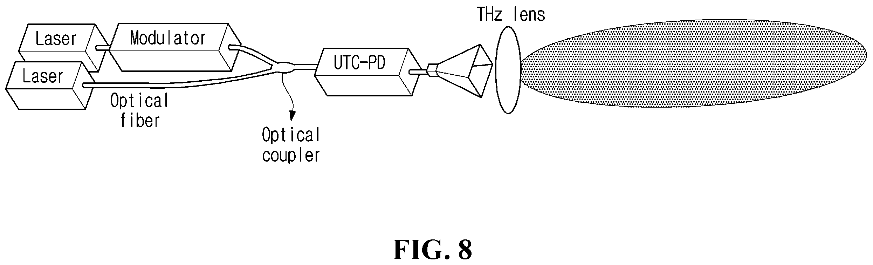

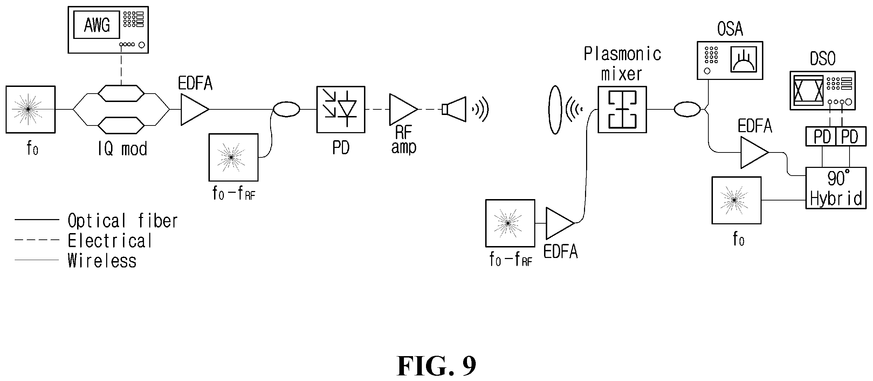

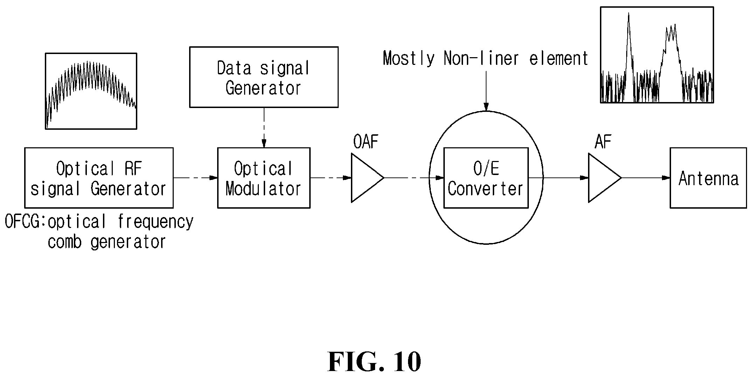

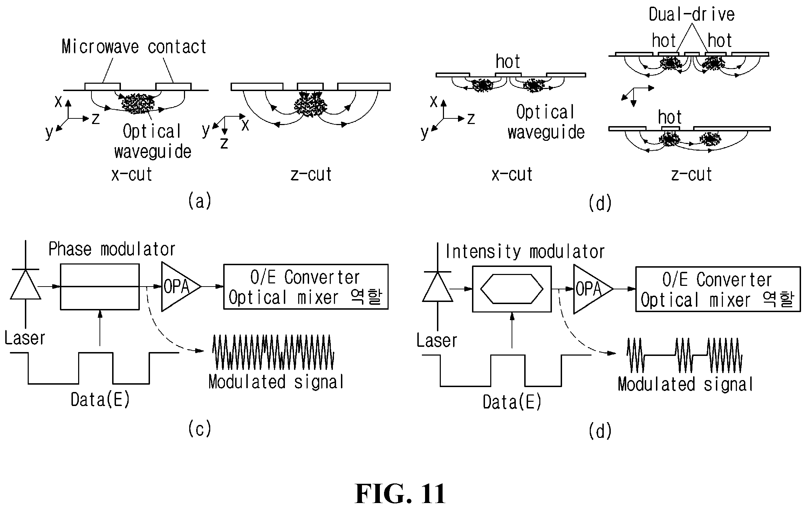

For example, THz communication is communication using a spectrum in a frequency band ranging from 0.1THz to 10THz with a corresponding wavelength in a range from 0.03mm to 3mm as shown in FIG. 6 and may be implemented using circuit elements in a structure as shown in FIG. 7. In addition, the optical wireless technology is a technology of generating and modulating a THz signal by using an optical element and may be implemented based on devices with structures as shown in FIG. 8, FIG. 9, FIG. 10 and FIG. 11.

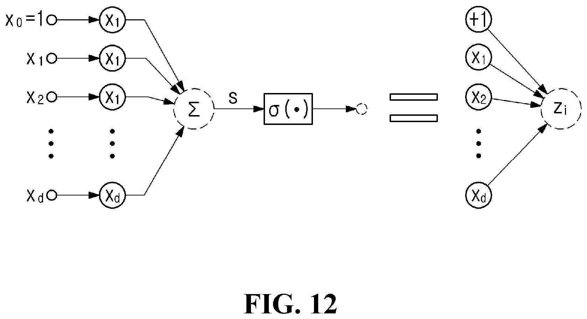

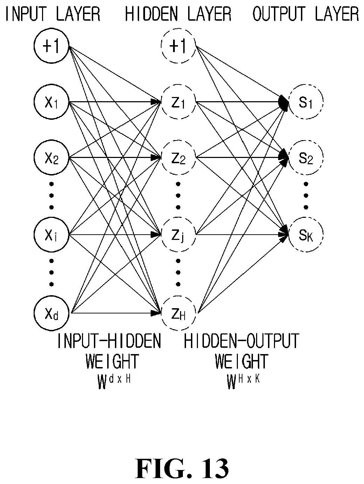

In addition, AI may be implemented based on various models such as neural networks and machine models. For example, an AI model with a neural network architecture may be based on the structure of perceptrons as shown in FIG. 12. Referring to FIG. 12, an artificial neural network may consist of a plurality of perceptrons. According to a structure of perceptrons, an input vector x={x1, x2, ..., xd} is input, each component is multiplied by a weight {W1, W2, ..., Wd}, results are all added up, and then an activation function σ() is applied. For a large artificial neural network architecture, when expanding the simplified perceptron structure illustrated in FIG. 12, an input may be applied to different multidimensional perceptrons. As perceptrons are stacked, a neural network with an input layer, a hidden layer and an output layer may be constructed as shown in FIG. 13.

Specific embodiment of the present disclosure

As data usage in wireless communication rapidly increases, communication power consumption of terminals is increasing. In the current communication system, the time for the terminal to monitor a physical downlink control channel (PDCCH) in a period without data transmission can be reduced by utilizing the discontinuous reception (DRX) technique. However, ab optimal parameter value related to DRX may vary depending on the status and usage environment of the terminal. Therefore, when the base station determines the status and usage environment of the terminal in real time and changes the optimal parameter value related to DRX, signaling overhead and power consumption may increase. To overcome this limitation, the terminal can actively optimize the parameter value related to DRX according to the status and usage environment of the terminal. The optimization process can be implemented based on artificial intelligence. Through this optimization, the power saving effect of the terminal can be increased without increasing communication latency and signaling overhead.

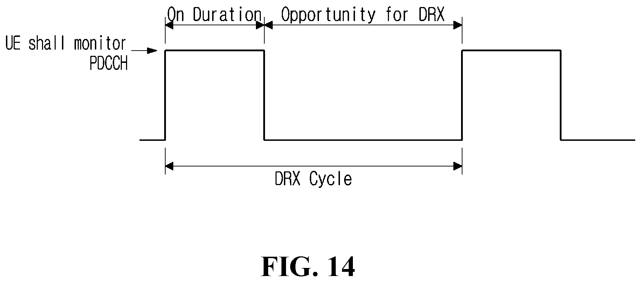

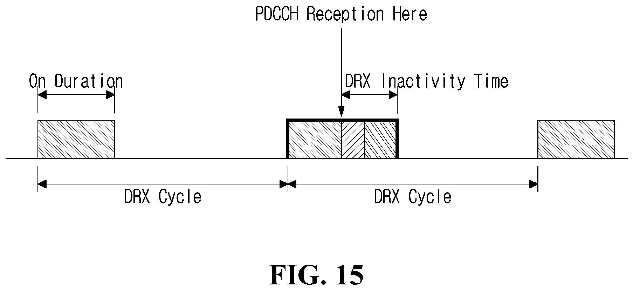

In the DRX technique of the existing communication, the terminal shall continuously monitor a control signal in order to receive data sent from the base station. That is, the terminal shall monitor a paging message in an idle mode and a PDCCH in a connected mode. In order to reduce the power consumption of monitoring the control signal in the period without data transmission, the terminal may determine a DRX cycle as shown in FIG. 14 according to the settings of the base station. The DRX cycle is a cycle in which the On-duration and the Opportunity for DRX with the possibility of being in an inactive state are repeated. The terminal can efficiently reduce power consumption by adjusting the active state in which the actual control signal is monitored and the sleep state in which the control signal is not monitored. First, the terminal performs monitoring in order to decode the PDCCH within the On-duration. If the terminal fails to successfully decode the PDCCH during the On-duration, the terminal does not perform monitoring to decode the PDCCH in the Opportunity for DRX. On the other hand, if the terminal successfully decodes the PDCCH during the On-duration as shown in FIG. 15, the terminal receives a PDSCH, which is a data channel, and an inactivity timer is activated. The terminal continues to monitor the PDCCH until the inactivity timer expires. That is, the terminal may continue to monitor the PDCCH in the Opportunity for DRX until the inactivity timer expires. Through this, the terminal may reduce communication latency caused by the DRX configuration when data is continuously transmitted.

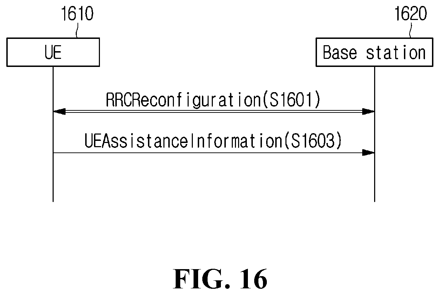

FIG. 16 illustrates an example of a procedure for setting DRX parameter values according to an embodiment of the present disclosure. In step S1601, a terminal 1610 and a base station 1620 may perform an RRC reconfiguration procedure. The base station 1620 transmits an RRC reconfiguration message to the terminal 1610, and the terminal 1610 transmits an RRC reconfiguration complete message to the base station 1620, thereby completing the RRC reconfiguration procedure. The RRC reconfiguration message may include a DRX-related parameter value. Therefore, the base station may set parameter values related to DRX, such as DRX on/off settings, by using the RRC reconfiguration procedure.

In step S1603, the terminal 1610 may transmit UE assistance information (UAI). The UE assistance information may include a DRX parameter value preferred by the terminal 1610. The DRX parameter value may include at least one of a preferred DRX inactivity timer, a preferred DRX long cycle or a preferred DRX short cycle, etc.

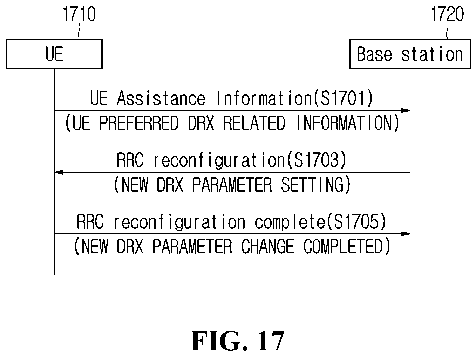

FIG. 17 illustrates another example of a procedure for setting parameter values related to DRX according to an embodiment of the present disclosure. In step S1701, a terminal 1710 may transmit UE assistance information to a base station 1720. The terminal 1710 may transmit UE assistance information to the base station 1720 when it has preferred DRX parameter values or when they have been changed.

In step S1703, the base station 1720 transmits an RRC reconfiguration message to the terminal 1710. The base station 1720 may determine a new DRX parameter value based on the DRX parameter values preferred by the terminal 1720 and transmit them to the terminal 1720 through the RRC reconfiguration message.

In step S1705, the terminal 1710 transmits an RRC reconfiguration complete message to the base station 1720. The terminal 1710 may change to the new DRX parameter value received from the base station 1720 and notify that the RRC reconfiguration has been successfully performed through the RRC reconfiguration complete message.

Referring to FIGS. 16 and 17, the DRX parameter change procedure may be initiated by either the base station or the terminal. Therefore, the procedure described below in which the terminal optimizes each parameter value using artificial intelligence may also be used in the procedure in which the base station optimizes each parameter value using artificial intelligence.

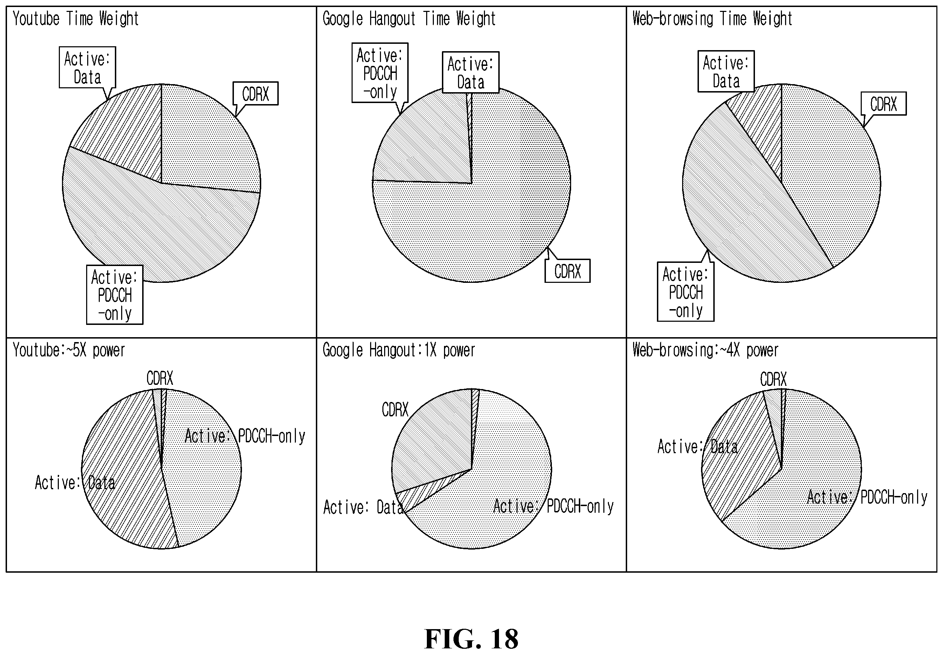

The optimal DRX parameter values may vary depending on the status and the usage environment of the terminal. FIG. 18 shows examples of time distribution and power distribution related to the power consumption of the terminal depending on the service used by the terminal. The main service used by the terminal in FIG. 18 are classified into three:

streaming, messaging, and web browsing, and all show the results using the same DRX parameter value. The upper part of FIG. 18 shows the time distribution of the terminal status, and the lower part shows the power distribution. Active Data means a reception state, Active: PDCCH-only means a state in which only a PDCCH is monitored before the inactivity timer is triggered and expires after receiving data. and CDRX means a DRX cycle in which the inactivity timer is not triggered due to no data reception. Referring to FIG. 18, the terminal consumes a lot of power in the Active: PDCCH only state for all three services, and the weight differs between services. Therefore, the terminal needs to set the optimized DRX parameter value based on the status and usage environment of the terminal, and minimize the PDCCH monitoring of the period without data under the condition that the quality of service (QoS) is not seriously deteriorated. However, in order for the base station to grasp all information in real time and change the DRX parameter value, signaling overhead and power consumption will inevitably increase. Therefore, a method may be considered to overcome these limitations by adaptively optimizing the DRX parameter value according to the status and usage environment of the terminal using an artificial intelligence algorithm.

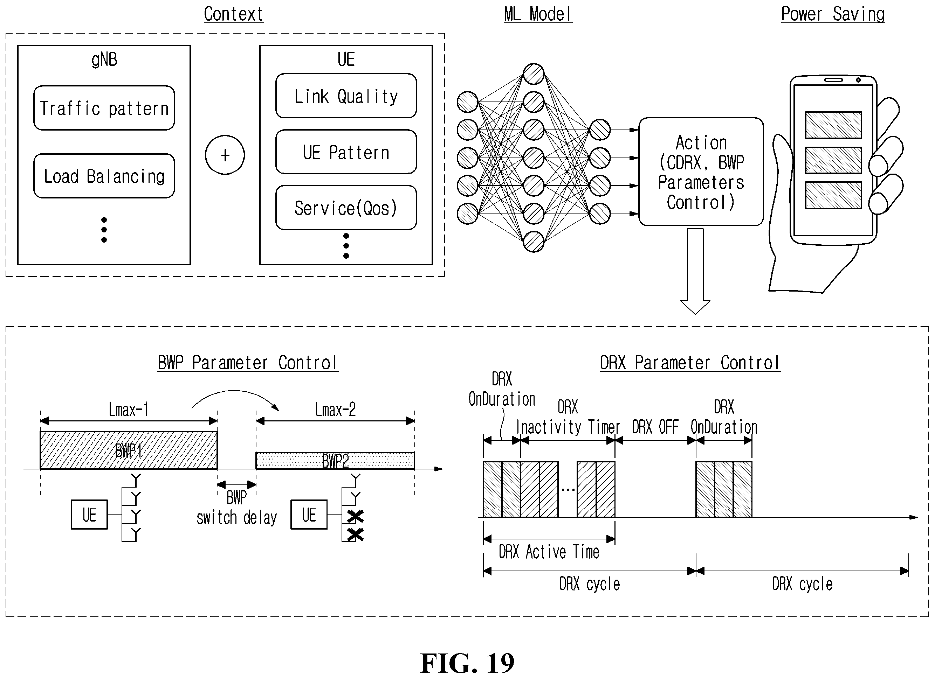

FIG. 19 is a conceptual diagram illustrating a terminal and a base station adaptively changing each DRX parameter value and bandwidth of the terminal according to an embodiment of the present disclosure.

Referring to FIG. 19, the base station and the terminal recognize the context and adaptively change a connected mode DRX (CDRX) parameter value or the bandwidth of the terminal based on the context, thereby increasing the power saving gain for PDCCH monitoring while minimizing the increase in average latency. The base station and the terminal each extract context information that may affect data transmission and reception and transmit it as input to an artificial intelligence model. The terminal may determine an optimal CDRX parameter value or bandwidth based on the context information by utilizing the artificial intelligence model. The context information that may be extracted from the base station may include at least one of a traffic pattern before scheduling is applied or an indicator value used for load balancing of the base station. The values used as the traffic pattern may include at least one of traffic volume, peak traffic, average traffic, traffic distribution, traffic type, inter-packet arrival time interval, or session duration. The context information that may be extracted from the terminal may include at least one of current link quality, user pattern, QoS of the used service, or the like. Using the context information extracted by the base station and terminal, the artificial intelligence model determines the optimal CDRX parameter value and bandwidth for bandwidth part (BWP). Based on the parameter value and bandwidth determined by the artificial intelligence model, the base station and terminal reconfigure the communication environment. Using this procedure, the terminal and base station may set the optimized DRX parameter value by considering the context information and communication environment.

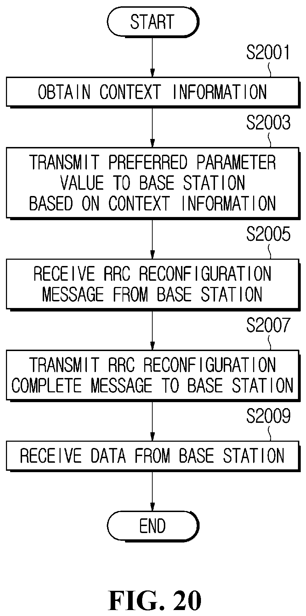

FIG. 20 illustrates an example of a procedure in which a terminal saves power based on context information according to an embodiment of the present disclosure. Referring to FIG. 20, the terminal may adaptively reconfigures parameter values for power saving based on the context information by utilizing artificial intelligence.

In step S2001, the terminal obtains context information. The context information may include at least one of the context information of the terminal and the context information of the base station. As described above, the context information that may be extracted from the base station may include at least one of a traffic pattern before scheduling is applied or an indicator value used for load balancing of the base station. The context information that may be extracted from the terminal may include at least one of the current link quality, a user pattern, QoS of a used service or the like.

The terminal obtains the context information of the terminal directly through measurement, and obtains the context information of the base station by receiving information measured by the base station. The terminal may obtain the context information periodically, or may obtain the context information when a specific event described later occurs. In order to obtain the context information of the base station, the terminal may transmit a message requesting the context information to the base station. To this end, the terminal may request the context information from the base station through an RRC reconfiguration request message.

In step S2003, the terminal transmits a preferred parameter value to the base station based on the context information. The terminal may determine the preferred parameter value based on the context information and the artificial intelligence model. The parameter value determined by the terminal may include at least one of the DRX parameter value preferred by the terminal or the bandwidth of the BWP. The terminal may determine the parameter value through inference of the artificial intelligence model that has been learned, or may utilize artificial intelligence that continues to learn in real time. At this time, the artificial intelligence model may be learned to have a parameter value that maintains QoS and has the highest power saving gain due to setting to DRX.

In step S2005, the terminal receives an RRC reconfiguration message from the base station. The base station determines a new parameter value to be used for communication between the terminal and the base station based on the preferred parameter value transmitted by the terminal and transmits it to the terminal. The terminal may receive the determined new parameter values from the base station through the RRC reconfiguration message.

In step S2007, the terminal transmits an RRC reconfiguration complete message to the base station. The terminal sets up communication with new parameter value based on the RRC reconfiguration message received from the base station and transmits an RRC reconfiguration complete message. Accordingly, at least one of the DRX cycle of the terminal, the DRX inactivity timer, the DRX on-duration period, or the bandwidth of the BWP may be changed.

In step S2009, the terminal receives data from the base station. Based on the new DRX parameter value, the PDCCH may be monitored and successfully decoded during the on-duration period or before the inactivity timer expires. The terminal may receive data of a PDSCH based on the decoded PDCCH.

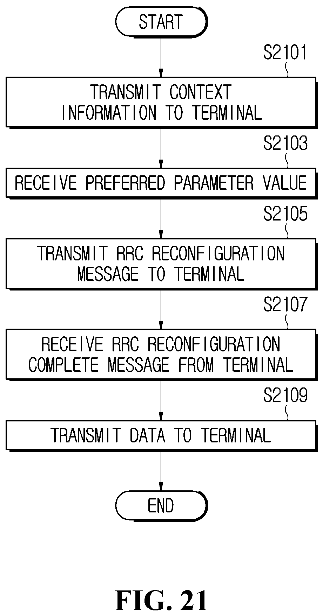

FIG. 21 illustrates an example of a procedure in which a base station saves power based on context information according to an embodiment of the present disclosure. Referring to FIG. 21, the base station may assist a terminal to find an optimized parameter value by transmitting context information of the base station to the terminal.

In step S2101, the base station transmits the context information of the base station to the terminal. The base station may transmit the context information to the terminal periodically, and may transmit the context information to the terminal when a specific event described later occurs. The context information of the base station may include at least one of an indicator value used for load balancing or a traffic pattern, etc.

In step S2103, the base station receives a preferred parameter value from the terminal. The terminal determines an optimal parameter value by utilizing an artificial intelligence model based on the context information and transmits the preferred parameter value to the base station. The preferred parameter value may include at least one of a DRX parameter value or a bandwidth of a BWP.

In step S2105, the base station transmits an RRC reconfiguration message to the terminal. The base station determines a new parameter value to be used for communication based on the received preferred parameter value. The base station may use the parameter value transmitted by the terminal as a new parameter value, or may use another optimal parameter value considering the communication environment. The new parameter value may include at least one of a new DRX parameter value or a new BWP bandwidth. The base station transmits the determined new parameter value through an RRC reconfiguration message.

In step S2107, an RRC reconfiguration complete message is received from the terminal. The terminal sets up a communication environment based on the received RRC reconfiguration message. Accordingly, cycle length, on-duration period, etc. may be newly applied based on a new DRX parameter value. The terminal that has completed the configuration transmits the RRC reconfiguration complete message to the base station, and the base station may start communication with the new parameter value applied by receiving the RRC reconfiguration complete message.

In step S2109, the base station transmits data to the terminal based on the new parameter value. The base station may set a new BWP bandwidth, etc. to transmit data based on the new parameter value.

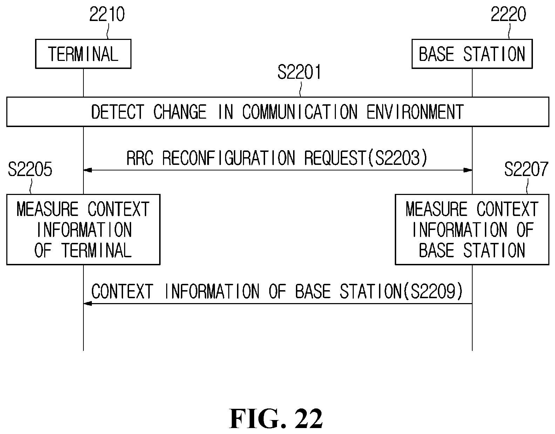

FIG. 22 illustrates a signal flow diagram of a procedure in which a terminal 2210 obtains context information of a base station 2220 according to an embodiment of the present disclosure. Referring to FIG. 22, the base station 2220 may transmit context information to the terminal 2210 when a DRX parameter and BWP reconfiguration are required due to a change in the communication environment.

In step S2201, the terminal 2210 and the base station 2220 detect the change in the communication environment. The terminal 2210 detects the change in the communication environment by recognizing at least one event among the following: a case where a time distribution value in the state of monitoring only a PDCCH (hereinafter, PDCCH-only) is greater than or equal to a threshold value before an inactivity timer is triggered and expires after receiving data during a DRX cycle, a case where QoS is not maintained, or a case where it is recognized that the user's pattern is rapidly changed. The base station 2220 detects the change in the communication environment by recognizing at least one event among the following: when load balance adjustment is required, when there is an urgent request from another user, or when transmission traffic is changed.

In step S2203, the device that detects the change in the communication environment transmits an RRC reconfiguration request message. In step S2203, the terminal 2210 that recognizes the change in the environment may transmit a context information measurement request message to the base station 2220 in order to set a new DRX parameter value, etc. If the base station 2220 recognizes the change in the environment, the base station 2220 may transmit a context information measurement request message to the terminal 2210. At this time, the terminal 2210 and the base station 2220 may request a communication environment reconfiguration together with the context information measurement request by transmitting the RRC reconfiguration request message.

In step S2205, the terminal 2210 measures the context information of the terminal 2210. After the terminal 2210 transmits or receives the RRC reconfiguration request message, the terminal 2210 may measure the context information of the terminal 2210. The context information that may be measured by the terminal 2210 may include at least one of current link quality, user pattern, or QoS of the used service.

In step S2207, the base station 2220 measures the context information of the base station 2220. The base station 2220 may measure the context information of the base station 2220 after transmitting or receiving an RRC reconfiguration request message.

The context information that may be extracted from the base station 2220 may include at least one of a traffic pattern before scheduling is applied or an indicator value used for load balancing of the base station. The values used as the traffic pattern may include at least one of traffic volume, peak traffic, average traffic, traffic distribution, traffic type, inter-packet arrival time interval, session duration, etc.

In step S2209, the base station 2220 transmits the context information of the base station 2220 to the terminal 2210. For example, the base station 2220 may transmit the context information itself described above to the terminal 2210. The base station 2220 may allocate a downlink resource for transmitting the context information and may transmit the context information to the terminal 2210 by including the context information in the corresponding resource. That is, the base station 2220 may transmit the context information itself to the terminal 2210 through the allocated resource. As another example, the base station 2220 may indicate the context information to the terminal 2210 based on a preset value. Here, the context information indication information may be included in the RRC reconfiguration request message described above through RRC signaling. The terminal 2210 may receive an RRC reconfiguration request message including a context information indicator from the base station, and recognize and apply the context information of the base station corresponding to the indicator. As another example, the base station 2220 may indicate the context information through at least one of other RRC signaling, MAC CE, and DCI. That is, it may be preset in the terminal 2210 and the base station 2220 corresponding to the context information indicator, and the context information may be recognized through the context information indicator value.

If the base station 2220 utilizes an artificial intelligence model based on the context information, the terminal 2210 may transmit the context information of the base station 2220 to the base station 2220.

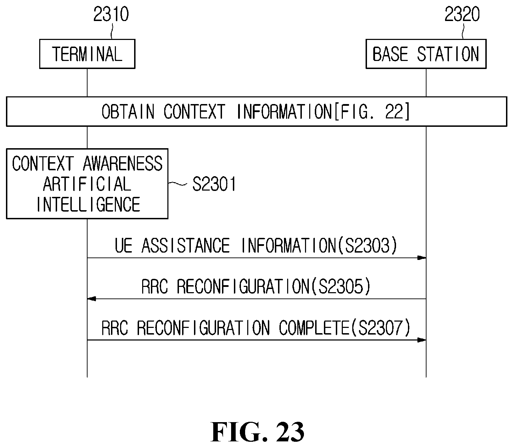

FIG. 23 illustrates a signal flow diagram of a procedure in which a terminal 2310 and a base station 2320 reconfigure RRC based on context information according to an embodiment of the present disclosure.

In step S2301, the terminal 2310 may find an optimal parameter value by inputting at least one of the received context information of the base station 2320 and its own context information to the artificial intelligence model. FIG. 23 is explained based on the terminal 2310 utilizing the artificial intelligence model, but it is also possible for the base station 2320 to find the optimal parameter value by utilizing the artificial intelligence model. In this case, as described above, the base station 2320 shall receive the context information of the terminal 2310 from the terminal 2310.

In step S2303, the terminal 2310 transmits a UE assistance information (UAI) message to the base station 2320 based on a parameter values inferred from the artificial intelligence model. The UE assistance information may include preferred DRX parameter values or BWP related parameter values.

In step S2305, the base station 2320 transmits an RRC reconfiguration message to the terminal 2310. The base station 2320 determines a DRX parameter value based on the received UE assistance information. The base station 2320 transmits an RRC reconfiguration message to the terminal 2310, upon determining that the DRX parameter value need to be changed.

In step S2307, the terminal 2310 transmits an RRC reconfiguration complete message to the base station 2320. The terminal 2310 may set a new DRX parameter based on the received RRC reconfiguration message.

As described above, the terminal and base station may set an optimal DRX parameter and BWP bandwidth value based on the context information by utilizing the artificial intelligence model. The terminal may set a new DRX parameter and determine a reward based on performance evaluation for the new DRX parameter value based on whether QoS is maintained and a DRX power saving gain value. The terminal may learn the artificial intelligence model through the reward by using reinforcement learning or the Contextual MAB technique. The criterion for determining the reward may be as shown in [Equation 1] below.

$$[\text{Equation 1}]$$
$$R = \begin{cases} 1, & PDCCHP_{current} < PDCCHP_{before} - \Delta \\ 0, & PDCCHP_{current} \geq PDCCHP_{before} - \Delta \end{cases}$$

In [Equation 1], R represents a reward, $PDCCHP_{current}$ represents a distribution value of a PDCCH-only period to which a new DRX parameter value is applied, $PDCCHP_{before}$ represents a distribution value of a PDCCH-only period to which a previous DRX parameter value is applied, and $\Delta$ represents a minimum distribution threshold value for compensating a reward.

As a result of applying the new DRX parameter value, if a latency time increases and QoS deteriorates, the terminal determines the reward as 0. On the other hand, if QoS is maintained, the terminal may determine the reward by [Equation 1]. At this time, the terminal may determine the reward as 1 only when the time for monitoring only the PDCCH is greater than a certain value by setting a threshold value.

The base station may modify the global model by periodically receiving local artificial intelligence models learned by the terminal. The terminal may also receive the global model from the base station. The terminal may create a local model suited to the terminal based on the global model received from the base station.

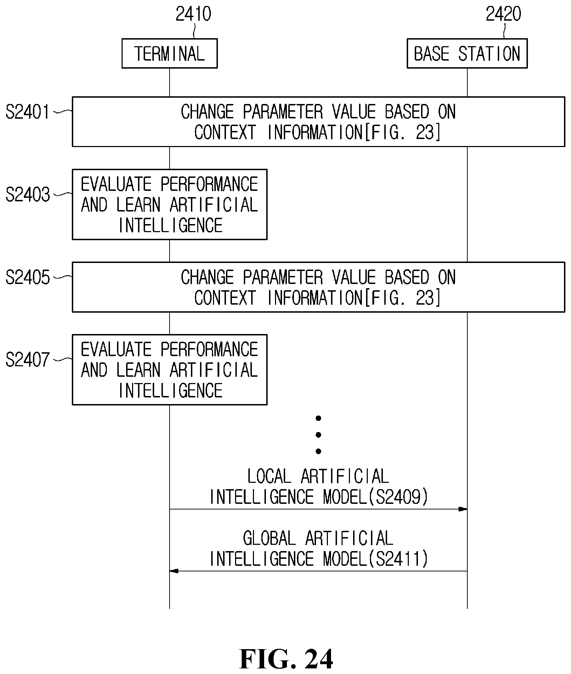

FIG. 24 illustrates a signal flow diagram of a procedure in which a terminal 2410 learns an artificial intelligence model and exchanges the artificial intelligence model with a base station 2420 according to an embodiment of the present disclosure. Referring to FIG. 24, the terminal 2410 may learn an artificial intelligence model that optimizes a parameter value to be used for communication.

In step S2401, the terminal 2410 and the base station 2420 change the parameter value based on context information. If a specific event occurs and the parameter value needs to be reconfiguration, the terminal 2410 and the base station 2420 may optimize a DRX parameter and the bandwidth of a BWP using the procedure illustrated in FIG. 23.

In step S2403, the terminal 2410 evaluates the performance of the artificial intelligence model and learns the artificial intelligence model. The terminal 2410 may determine a reward based on [Equation 1] above to evaluate the performance of the artificial intelligence model. At this time, the artificial intelligence learning may be performed by at least one of machine learning or deep learning.

In steps S2405 and S2407, the terminal 2410 repeatedly performs steps S2401 and S2403. If the DRX parameter and the bandwidth of the BWP need to be changed depending on the communication environment, the terminal 2410 may change the parameter values based on the context information and evaluate and train the artificial intelligence model. As a result of this repeated training, the performance of the local artificial intelligence model of the terminal 2410 can be improved.

In step S2409, the terminal 2410 transmits a local artificial intelligence model to the base station 2420. The base station 2420 may set the terminal 2410 to transmit the local artificial intelligence model at specific intervals. In addition, the base station 2420 may receive the local artificial intelligence model by transmitting a local artificial intelligence model request signal to the terminal 2410.

In step S2411, the terminal 2410 receives a global artificial intelligence model from the base station 2420. The base station 2420 may receive local artificial intelligence models from other terminals as well as the terminal 2410, and may determine a global artificial intelligence model by synthesizing the received local artificial intelligence models.

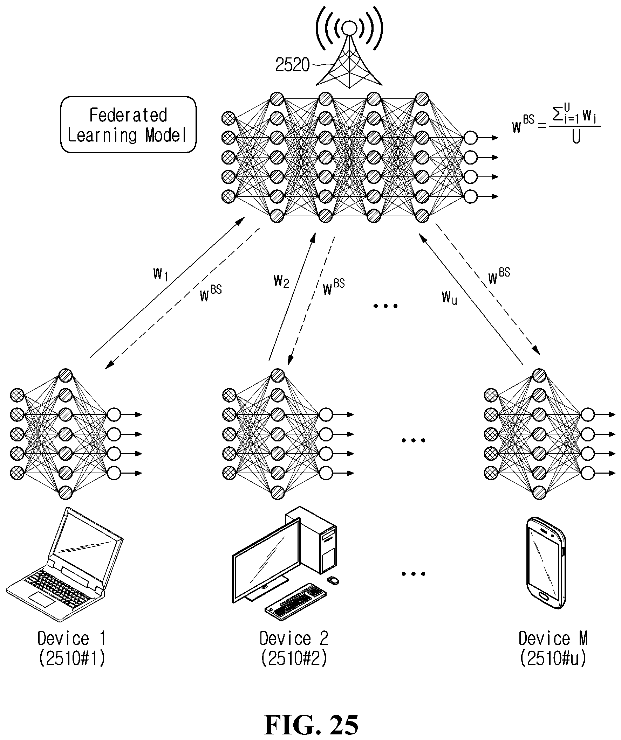

FIG. 25 illustrates a method in which a base station 2520 determines a global model through local models received from terminals 2510#1 to 2510#u using federated learning according to an embodiment of the present disclosure.

The base station 2520 may receive local models w1 to wu from the terminals 2510#1 to 2510#u and determine a global model wBS based on the received local models. The base station 2520 may determine the global model by averaging the local models w1 to wu as shown in FIG. 25. FIG. 25 illustrates only the arithmetic mean, but the base station 2520 may also use at least one of the weighted mean, the geometric mean or the harmonic mean, etc. The base station 2520 and each of the terminals 2510#1 to 2510#u may also calculate the global model wirelessly by using over-the-air computation that utilizes wireless signal superposition.

Each of the terminals 2510#1 to 2510#u may perform transfer learning suited to its own communication environment by receiving the global model from the base station 2520 when necessary.

The input and output of the artificial intelligence model may be set according to the usage pattern. FIG. 24 illustrates a conceptual diagram of an artificial intelligence model according to an embodiment of the present disclosure. The input of the artificial intelligence model may include at least one of a traffic pattern of a base station, an indicator value for load balancing, link quality of a terminal, or QoS of a pattern use service of a user. FIG. 24 illustrates the input as five elements, but the number of inputs may be four or less. In addition, since the values indicating the traffic pattern, the indicator value for load balancing, and the user pattern are diverse, the number of input elements may be six or more. The output of the artificial intelligence model may include a DRX parameter value or a bandwidth of a BWP. The number of outputs may also be designed in various ways like the number of inputs. The terminal may predict an optimal DRX control value, etc. by inputting measured context information to the artificial intelligence model.

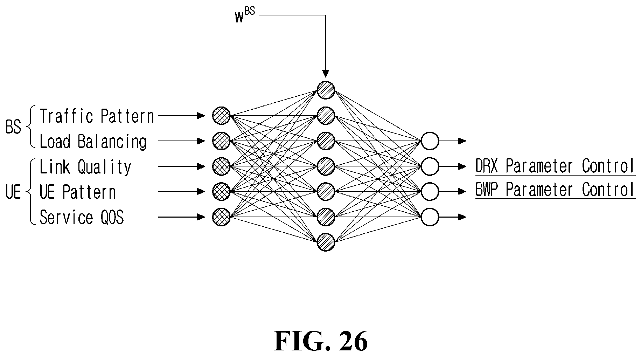

For example, the artificial intelligence learning participant may learn the AI model of FIG. 26 through supervised learning. In the case of supervised learning, the learning participant knows the answer to the problem and is a learning method in which the artificial intelligence is trained to find it. In the case of using supervised learning, the context information of the base station and the terminal may be regarded as data. The learning participant needs to label the optimal terminal control values corresponding to the corresponding context information. Therefore, for each context, the learning participant needs to make a separate effort to find the optimal control value of the terminal. In FIG. 26, $w^{BS}$ represents that the base station updates the global model through federated learning. The base station may update the global model using the method described above through FIG. 25.

Supervised learning enables inference of an optimal output value with a small amount of computation. Therefore, supervised learning models are relatively easy to implement on terminals. However, since a data labeling process is required for learning, supervised learning methods may place a lot of burden on the learning participant. As the types of context information increase, the labeling required for supervised learning can increase exponentially. In addition, if the learned data does not fit the actual environment or the environment changes, relearning may be required to optimize the artificial intelligence model. In this case, a new labeling process may be required for relearning.

Therefore, an artificial intelligence learning model that may respond flexibly to the change in the environment may be proposed. For example, reinforcement learning and muti-armed bandit (MAB) artificial intelligence models may be used. Using reinforcement learning and MAB artificial intelligence models, an artificial intelligence model capable of real-time learning according to the change in the environment may be implemented. Therefore, the burden of labeling required in supervised learning is reduced. Since reinforcement learning performs learning simultaneously with prediction, the amount of computation may be greater from a prediction perspective than supervised learning.

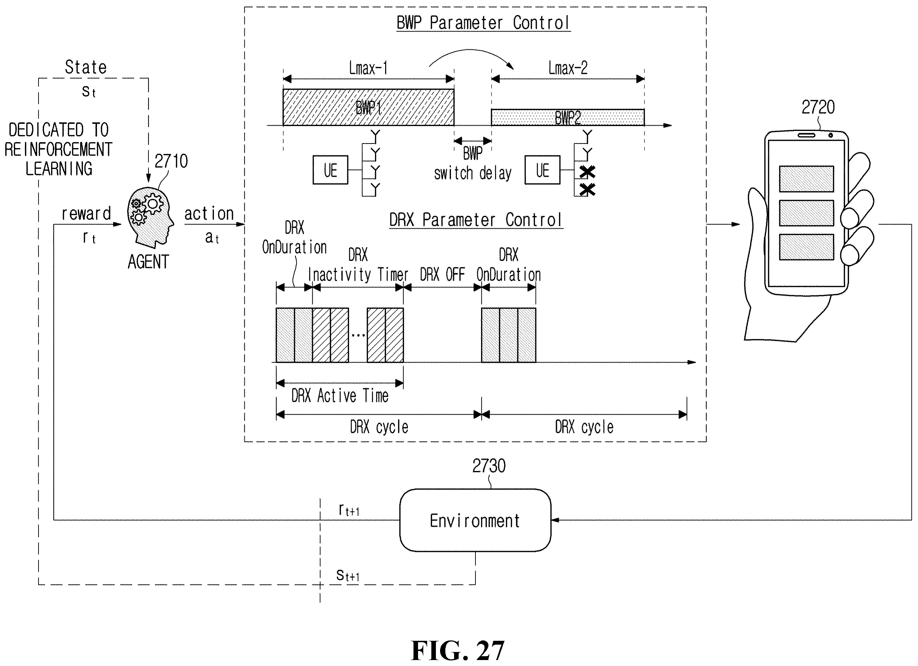

FIG. 27 illustrates a process of learning a reinforcement learning artificial intelligence model according to an embodiment of the present disclosure. An agent 2710 predicts an optimal action based on a state extracted from an environment 2730. An artificial intelligence model is re-learned through an evaluation (reward) of an action performed by the agent 2710 in a current state. State information may include context information measured by a base station and a terminal as a factor extracted from the environment 2730. In addition, the state information may include a DRX control value or a BWP control value when the context information is extracted. That is, in reinforcement learning, an action may also be a factor that changes a state. Therefore, a state may be expressed as in [Equation 2] below.

$$[\text{Equation 2}]$$
$$s_t = \{\ Context_{BS}, Context_{UE},\ DRX_{current}, BWP_{current}\ \}$$

In [Equation 2], $s_t$ denotes a t-th state, $Context_{BS}$ denotes the context information of the base station, $Context_{UE}$ denotes the context information of the terminal, $DRX_{curent}$ denotes the current DRX control values, and $BWP_{curent}$ denotes the control values of the current BWP.

An action may be composed of a DRX control value and a BWP control value. As another example, an action may be composed of an index of a codebook indicating a DRX control value and a BWP control value. Even when a codebook is used, the setting values of DRX and BWP are ultimately applied. As another example, when only DRX is controlled, the learning participant may remove the control value related to BWP and learn only with the DRX control value.

The action of the agent 2710 may be expressed as in [Equation 3] below.

$$[\text{Equation 3}]$$
$$a_t = (a_t^{DRX}, a_t^{BWP})$$

In [Equation 3], $a_t$ denotes a t-th action, $a_t^{DRX}$ denotes a t-th DRX control value, and $a_t^{BWP}$ denotes a t-th BWP control value.

The learning participant may set the reward to 0 if the QoS is adversely affected by the increased communication latency. The learning participant may provide a reward based on energy efficiency if the QoS is not affected. For example, the reward may be determined by comparing the distribution value of the PDCCH-only to which the new DRX control value is set and the distribution value of the PDCCH-only to which the previous DRX control value is set. The learning participant may determine that the communication energy efficiency has increased if the distribution value of the PDCCH-only to which the new DRX control value is set is smaller than before. Therefore, the reward may be expressed as in [Equation 4] below.

$$[\text{Equation 4}]$$
$$\Delta = PDCCHP_{Before} - PDCCHP_{Current}$$
$$R = \begin{cases} \Delta, & if\ QoS_{Current} \geq QoS_{Target} \\ 0, & if\ QoS_{Current} < QoS_{Target} \end{cases}$$

In [Equation 4], $PDCCHP_{Current}$ denotes the distribution value of PDCCH-only to which the new DRX control value is applied, $PDCCHP_{Before}$ denotes the distribution value of PDCCH-only to which the previous DRX control value is applied, R denotes a reward, $Qosc_{Current}$ denotes QoS to which the new DRX control value is applied, and $QoS_{Target}$ denotes a QoS threshold value for communication service quality.

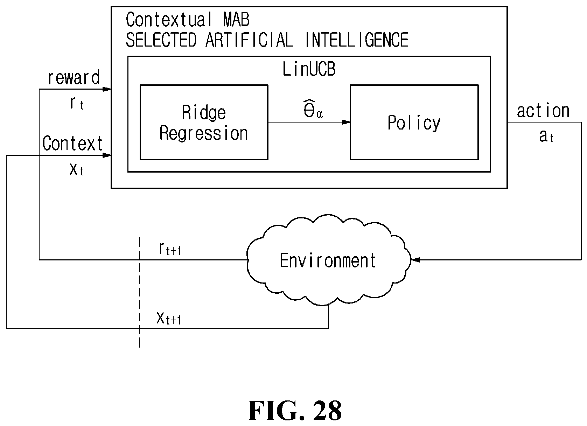

FIG. 28 illustrates a process of learning an artificial intelligence model based on MAB according to an embodiment of the present disclosure. Since reinforcement learning has a relatively high computational amount, a MAB artificial intelligence model may be used, and since context information changes, a contextual MAB may be used. By using the MAB artificial intelligence model, a terminal may implement an artificial intelligence model with a lighter computational amount than general reinforcement learning. Therefore, the MAB artificial intelligence model is suitable for the Edge AI field where power consumption is important. In particular, the Contextual MAB is an artificial intelligence model that improves MAB, which is poor at responding to rapid environmental changes, as a MAB that considers the context. Therefore, since the Contextual MAB is composed of an action and a reward similar to reinforcement learning, the values used in reinforcement learning may be used without change. On the other hand, context information is used instead of the state of reinforcement learning, and the context information may include a value representing the environment. Unlike reinforcement learning where the environment changes depending on the action, the contextual MAB does not change the context information depending on the action, and the context information may be changed only by the change in the environment.

Therefore, context information $x_t$ may be expressed as in [Equation 5] below, which is a form that removes elements that change according to actions, unlike reinforcement learning.

$$[\text{Equation 5}]$$
$$x_t = \{ Context_{BS}, Context_{UE} \}$$

In [Equation 5], $Context_{BS}$ denotes the context information of the base station, and $Context_{UE}$ denotes the context information of the terminal.

FIG. 28 illustrates a method of using linear upper confidence bound (LinUCB) among contextual MABs. LinUCB may include a ridge regression part that learns and a policy part that actually selects an optimal action in a given context. The initial values $A_a$ and $B_a$ of the artificial intelligence model may be set as shown in [Equation 6] below.

$$[\text{Equation 6}]$$
$$A_a \leftarrow I_d (d\text{-}dimensional\ identity\ matrix)$$
$$b_a \leftarrow 0_{d \times 1} (d\text{-}dimensional\ zero\ vector)$$

The ridge regression part of the artificial intelligence model may estimate a context vector $\hat{\theta}_a$ through action and reward values based on previous context values, as in [Equation 7] below.

$$[\text{Equation 7}]$$
$$A_{a_t} \leftarrow A_{a_t} + x_{t,\ a_t} x_{t,\ a_t}^T$$
$$b_{a_t} \leftarrow b_{a_t} + r_t x_{t,\ a_t}$$
$$\hat{\theta}_a \leftarrow A_a^{-1} b_a$$

Based on the context vector $\hat{\theta}_a$ estimated in this way, the artificial intelligence model may obtain the probability of each action according to the current context as in [Equation 8] below.

$$[\text{Equation 8}]$$
$$p_{t,\ a} \leftarrow \hat{\theta}_a^T x_{t,a} + \alpha \sqrt{x_{t,a}^T A_a^{-1} x_{t,a}}$$

In [Equation 8], $\alpha$ is a positive number that indicates a hyperparameter value that determines exploration.

The policy part of the artificial intelligence model may select an action with the highest probability as in [Equation 9] below.

$$[\text{Equation 9}]$$
$$a_t \leftarrow argmax_{a \in A_t}\ p_{t,\ a}$$

In [Equation 9], $argmax_{a \in A_t}(f(a))$ denotes a function that finds the value of a that makes the $f(a)$ value the largest.

Therefore, referring to FIG. 28, by selecting the action with the highest probability based on the contextual MAB algorithm, the terminal may optimize each control value. Unlike the reinforcement learning of FIG. 27, the amount of computation can be reduced by learning only with the context information $x_t$ and reward $r_t$ from which the change factor of the action is removed.

The proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

**Industrial Applicability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method of operating a terminal in a wireless communication system, the method comprising:

   establishing a radio resource control (RRC) connection with a base station;
   obtaining context information;
   transmitting a preferred parameter value derived by an artificial intelligence model based on the context information to the base station;
   receiving an RRC reconfiguration message determined based on the preferred parameter from the base station;
   receiving an RRC reconfiguration complete message to the base station; and
   receiving data from the base station,
   wherein the preferred parameter value includes a discontinuous reception (DRX) control value.

2. The method of claim 1, wherein the preferred parameter value further includes a control value of a bandwidth part (BWP).

3. The method of claim 1, wherein the context information includes context information of the terminal and context information of the base station, the context information of the terminal includes at least one of link quality, user pattern or quality of service (QoS) of a used service, and the context information of the base station includes at least one of a traffic pattern indicator value or a load balancing indicator value.

4. The method of claim 3, wherein the artificial intelligence model is learned based on at least one of a reinforcement learning model or a multi-armed bandit (MAB) model.

5. The method of claim 4,

   wherein the artificial intelligence model is an artificial intelligence model received based on a global artificial intelligence model from the base station,
   wherein the method further comprises:

      evaluating performance of the artificial intelligence model;
      learning the artificial intelligence model;
      transmitting the artificial intelligence model to the base station; and
      receiving a global artificial intelligence model determined based on artificial intelligence models of the terminal and other terminals from the base station.

6. The method of claim 5,
   wherein the obtaining the context information comprises:

      the terminal transmitting an RRC reconfiguration request message to the base station after detecting a change in a communication environment of the terminal and receiving the context information of the base station from the base station; and
      obtaining the context information of the terminal through measurement.

7. The method of claim 6, wherein the change in the communication environment of the terminal includes at least one of a case where a period in which only a physical downlink control channel (PDCCH) is monitored during a DRX cycle is greater than or equal to a preset value, a case where a QoS value is less than a preset value or a case where a user pattern is changed.

8. The method of claim 5, wherein the obtaining the context information comprises receiving an RRC reconfiguration request message from the base station that has detected the change in the communication environment of the base station, measuring the context information of the terminal and receiving the context information of the base station from the base station.

9. The method of claim 8, wherein the communication environment of the base station is changed based on at least one of a change in a setting value of the base station, a request from another terminal and a change in transmission traffic.

10. A method of operating a base station in a wireless communication system, the method comprising:

establishing a radio resource control (RRC) connection with a terminal;
transmitting context information of the base station to the terminal;
receiving a preferred parameter value derived by an artificial intelligence model from the terminal;
transmitting an RRC reconfiguration message to the terminal based on the preferred parameter value;
receiving an RRC reconfiguration complete message from the terminal; and
transmitting data to the terminal,
wherein the preferred parameter value includes a discontinuous reception (DRX) control value.

11. The method of claim 10, wherein the context information of the base station includes at least one of a traffic pattern indicator value or a load balancing indicator value.

12. The method of claim 11, further comprising:

transmitting a global artificial intelligence model to the terminal;
receiving a learned artificial intelligence model from the terminal;
updating a global artificial intelligence model based on the learned artificial intelligence model and an artificial intelligence model learned from another terminal; and
transmitting the global artificial intelligence model to the terminal.

13. The method of claim 12, further comprising receiving an RRC reconfiguration request message from the terminal.

14. The method of claim 12, further comprising:

detecting a change in a communication environment of the base station; and
transmitting an RRC reconfiguration request message to the terminal.

15. The method of claim 14, wherein the change in the communication environment of the base station includes at least one of a case where load balancing setting values of the base station needs to be changed, a case where there is a request from another terminal or a case where transmission traffic is changed.

16. A terminal in a wireless communication system comprising:

a transceiver; and
a processor connected to the transceiver,
wherein the processor is configured to:

establish a radio resource control (RRC) connection with a base station;
obtain context information;
transmit a preferred parameter value derived by an artificial intelligence model based on the context information to the base station;
receive an RRC reconfiguration message determined based on the preferred parameter from the base station;
receive an RRC reconfiguration complete message to the base station; and

receive data from the base station,
wherein the preferred parameter value includes a discontinuous reception (DRX) control value.

17. A base station in a wireless communication system comprising:

a transceiver; and
a processor connected to the transceiver,
wherein the processor is configured to:

establish a radio resource control (RRC) connection with a terminal;
transmit context information of the base station to the terminal;
receive a preferred parameter value derived by an artificial intelligence model from the terminal;
transmit an RRC reconfiguration message to the terminal based on the preferred parameter value;
receive an RRC reconfiguration complete message from the terminal; and
transmit data to the terminal,
wherein the preferred parameter value includes a discontinuous reception (DRX) control value.

18. A communication device comprising:

at least one processor; and
at least one memory connected to the at least one processor and configured to store instructions that direct operations when executed by the at least one processor,
wherein the operations comprise:

establishing a radio resource control (RRC) connection with a base station;
obtaining context information;
transmitting a preferred parameter value derived by an artificial intelligence model based on the context information to the base station;
receiving an RRC reconfiguration message determined based on the preferred parameter from the base station;
receiving an RRC reconfiguration complete message to the base station; and
receiving data from the base station,
wherein the preferred parameter value includes a discontinuous reception (DRX) control value.

19. A non-transitory computer-readable medium storing at least one instruction, the non-transitory computer-readable medium comprising the at least one instruction executable by a processor, wherein the at least one instruction enables a device to:

establish a radio resource control (RRC) connection with a base station;
obtain context information;
transmit a preferred parameter value derived by an artificial intelligence model based on the context information to the base station;
receive an RRC reconfiguration message determined based on the preferred parameter from the base station;
receive an RRC reconfiguration complete message to the base station; and
receive data from the base station,
wherein the preferred parameter value includes a discontinuous reception (DRX) control value.

FIG. 1

**FIG. 2**

FIG. 3

Terminal
(410)

Base Station
(420)

synchronization (401)

System information acquisition (403)

random access (405)

control information signaling (407)

data transmission/reception (409)

# FIG. 4

FIG. 5

Wavelength $10^8$m  1m  10mm  1mm  0.1mm  700nm 390nm  10nm  0.01nm

Radio  Microwave  mmWave Terahertz  Infrared  Visible Ultraviolet  X-Ray  Gamma-Ray

Radiation Type

Frequency  3 Hz 300 MHz  30 GHz 300 GHz  3 THz 430 THz 730 THz  30 PHz  30 EHz

Mega: $10^6$  Giga: $10^9$  Tera: $10^{12}$  Peta: $10^{15}$  Exa: $10^{18}$

**FIG. 6**

**FIG. 7**

**FIG. 8**

EP 4 590 033 A1

**FIG. 9**

**FIG. 10**

FIG. 11

**FIG. 12**

INPUT LAYER    HIDDEN LAYER    OUTPUT LAYER

INPUT-HIDDEN    HIDDEN-OUTPUT
WEIGHT          WEIGHT
$W^{d \times H}$    $W^{H \times K}$

**FIG. 13**

**FIG. 14**

PDCCH Reception Here

On Duration

DRX Inactivity Time

DRX Cycle

DRX Cycle

**FIG. 15**

1610

UE

1620

Base station

RRCReconfiguration(S1601)

UEAssistanceInformation(S1603)

**FIG. 16**

1710                                                          1720

┌──────────────┐                                    ┌──────────────────┐
│      UE      │                                    │   Base station   │
└──────┬───────┘                                    └─────────┬────────┘
       │        UE Assistance Information(S1701)              │
       ├────────────────────────────────────────────────────▶│
       │     (UE PREFERRED DRX RELATED INFORMATION)           │
       │                                                      │
       │          RRC reconfiguration(S1703)                  │
       │◀─────────────────────────────────────────────────────┤
       │           (NEW DRX PARAMETER SETTING)                │
       │                                                      │
       │        RRC reconfiguration complete(S1705)           │
       ├────────────────────────────────────────────────────▶│
       │     (NEW DRX PARAMETER CHANGE COMPLETED)             │
       │                                                      │

# FIG. 17

FIG. 18

EP 4 590 033 A1

FIG. 19

**FIG. 20**

START

TRANSMIT CONTEXT
INFORMATION TO TERMINAL ⟩S2101

RECEIVE PREFERRED PARAMETER VALUE ⟩S2103

TRANSMIT RRC RECONFIGURATION
MESSAGE TO TERMINAL ⟩S2105

RECEIVE RRC RECONFIGURATION
COMPLETE MESSAGE FROM TERMINAL ⟩S2107

TRANSMIT DATA TO TERMINAL ⟩S2109

END

**FIG. 21**

2210

TERMINAL

2220

BASE STATION

S2201

DETECT CHANGE IN COMMUNICATION ENVIRONMENT

RRC RECONFIGURATION REQUEST(S2203)

S2205

S2207

MEASURE CONTEXT
INFORMATION
OF TERMINAL

MEASURE CONTEXT
INFORMATION OF
BASE STATION

CONTEXT INFORMATION OF BASE STATION(S2209)

**FIG. 22**

2310

2320

| TERMINAL | | BASE STATION |

| OBTAIN CONTEXT INFORMATION[FIG. 22] |

| CONTEXT AWARENESS ARTIFICIAL INTELLIGENCE | ~ S2301 |

UE ASSISTANCE INFORMATION(S2303)

RRC RECONFIGURATION(S2305)

RRC RECONFIGURATION COMPLETE(S2307)

**FIG. 23**

2410

2420

TERMINAL

BASE STATION

S2401 — CHANGE PARAMETER VALUE BASED ON
CONTEXT INFORMATION[FIG. 23]

S2403 — EVALUATE PERFORMANCE
AND LEARN ARTIFICIAL
INTELLIGENCE

S2405 — CHANGE PARAMETER VALUE BASED ON
CONTEXT INFORMATION[FIG. 23]

S2407 — EVALUATE PERFORMANCE
AND LEARN ARTIFICIAL
INTELLIGENCE

LOCAL ARTIFICIAL
INTELLIGENCE MODEL(S2409)

GLOBAL ARTIFICIAL
INTELLIGENCE MODEL(S2411)

**FIG. 24**

Federated Learning Model

$$W^{BS} = \frac{\sum_{i=1}^{U} W_i}{U}$$

$W_1$  $W^{BS}$  $W_2$  $W^{BS}$  $W_u$  $W^{BS}$

. . .

. . .

. . .

. . .

Device 1
(2510#1)

Device 2
(2510#2)

Device M
(2510#u)

**FIG. 25**

**FIG. 26**

**FIG. 27**

**FIG. 28**

## INTERNATIONAL SEARCH REPORT

| | International application No. |
| --- | --- |
| | **PCT/KR2023/008888** |

### A. CLASSIFICATION OF SUBJECT MATTER

**H04W 52/02**(2009.01)i; **H04W 76/28**(2018.01)i; **G06N 20/20**(2019.01)i

According to International Patent Classification (IPC) or to both national classification and IPC

### B. FIELDS SEARCHED

Minimum documentation searched (classification system followed by classification symbols)

H04W 52/02(2009.01); G06N 20/00(2019.01); G06N 3/02(2006.01); H04B 7/06(2006.01); H04L 5/00(2006.01); H04W 40/12(2009.01); H04W 76/20(2018.01); H04W 76/27(2018.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RRC, 상황 정보(situation information), 인공지능(AI), 선호 파라미터(preferred parameter), RRC 재설정(RRC reconfiguration), DRX 제어값(DRX control value)

### C. DOCUMENTS CONSIDERED TO BE RELEVANT

| Category* | Citation of document, with indication, where appropriate, of the relevant passages | Relevant to claim No. |
| --- | --- | --- |
| Y | US 2021-0219377 A1 (QUALCOMM INCORPORATED) 15 July 2021 (2021-07-15) See paragraphs [0147]-[0150]; claims 8 and 10; and figure 10. | 1,3-4,10-11,16-19 |
| A | | 2,5-9,12-15 |
| Y | KR 10-2015-0032740 A (QUALCOMM INCORPORATED) 27 March 2015 (2015-03-27) See paragraph [0074]; claim 1; and figure 7. | 1,3-4,16,18-19 |
| Y | KR 10-2003-0079632 A (LG ELECTRONICS INC.) 10 October 2003 (2003-10-10) See claims 1-2. | 3-4,10-11,17 |
| Y | KR 10-2021-0140901 A (KT CORPORATION) 23 November 2021 (2021-11-23) See claim 1. | 4 |
| A | WO 2022-086160 A1 (LG ELECTRONICS INC.) 28 April 2022 (2022-04-28) See paragraphs [0147]-[0156]; and figure 8. | 1-19 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 September 2023** | **25 September 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2023/008888** |

| Patent document cited in search report | | | Publication date (day/month/year) | Patent family member(s) | | | Publication date (day/month/year) |
|---|---|---|---|---|---|---|---|
| US | 2021-0219377 | A1 | 15 July 2021 | CN | 114930978 | A | 19 August 2022 |
| | | | | EP | 4091400 | A1 | 23 November 2022 |
| | | | | WO | 2021-146245 | A1 | 22 July 2021 |
| KR | 10-2015-0032740 | A | 27 March 2015 | CN | 104471503 | A | 25 March 2015 |
| | | | | CN | 104471503 | B | 21 November 2017 |
| | | | | EP | 2875413 | A1 | 27 May 2015 |
| | | | | EP | 2875413 | B1 | 01 January 2020 |
| | | | | IN | 2650MUN2014 | A | 21 August 2015 |
| | | | | JP | 2015-530779 | A | 15 October 2015 |
| | | | | JP | 2018-093510 | A | 14 June 2018 |
| | | | | JP | 6498797 | B2 | 10 April 2019 |
| | | | | JP | 6556622 | B2 | 07 August 2019 |
| | | | | US | 11405841 | B2 | 02 August 2022 |
| | | | | US | 2015-0016412 | A1 | 15 January 2015 |
| | | | | WO | 2014-014776 | A1 | 23 January 2014 |
| KR | 10-2003-0079632 | A | 10 October 2003 | AU | 2003-222461 | A1 | 27 October 2003 |
| | | | | CN | 1647562 | A | 27 July 2005 |
| | | | | EP | 1351424 | A2 | 08 October 2003 |
| | | | | EP | 1351424 | A3 | 29 March 2006 |
| | | | | EP | 1351424 | B1 | 11 May 2016 |
| | | | | EP | 2037614 | A2 | 18 March 2009 |
| | | | | EP | 2037614 | A3 | 14 September 2011 |
| | | | | EP | 2037614 | B1 | 11 May 2016 |
| | | | | ES | 2585639 | T3 | 07 October 2016 |
| | | | | ES | 2585678 | T3 | 07 October 2016 |
| | | | | HK | 1075349 | A1 | 09 December 2005 |
| | | | | JP | 2005-521360 | A | 14 July 2005 |
| | | | | JP | 2008-301503 | A | 11 December 2008 |
| | | | | JP | 4323327 | B2 | 02 September 2009 |
| | | | | JP | 4662567 | B2 | 30 March 2011 |
| | | | | RU | 2004132828 | A | 20 April 2005 |
| | | | | RU | 2291591 | C2 | 10 January 2007 |
| | | | | US | 2004-0009767 | A1 | 15 January 2004 |
| | | | | US | 2009-0093243 | A1 | 09 April 2009 |
| | | | | US | 7822044 | B2 | 26 October 2010 |
| | | | | US | 8102862 | B2 | 24 January 2012 |
| | | | | WO | 03-088695 | A1 | 23 October 2003 |
| KR | 10-2021-0140901 | A | 23 November 2021 | None | | | |
| WO | 2022-086160 | A1 | 28 April 2022 | KR | 10-2023-0072478 | A | 24 May 2023 |

Form PCT/ISA/210 (patent family annex) (July 2022)